Europäisches Patentamt

European Patent Office

Office européen des brevets

(11) Veröffentlichungsnummer: **0 596 438 A2**

# (12) EUROPÄISCHE PATENTANMELDUNG

(21) Anmeldenummer: **93117668.9**

(22) Anmeldetag: **02.11.93**

(51) Int. Cl.5: **B09B 3/00**, C03C 1/00

(30) Priorität: **06.11.92 CH 3449/92**

(43) Veröffentlichungstag der Anmeldung:
**11.05.94 Patentblatt 94/19**

(84) Benannte Vertragsstaaten:
**AT CH DE FR GB IT LI NL SE**

(71) Anmelder:
**SONDERABFALLVERWERTUNGS-AG SOVAG**
**Bernstrasse 5**
**CH-3110 Münsingen(CH)**

(72) Erfinder: **Schindler, Hans-Georg**
**Hangstrasse 8**
**CH-6373 Ennetbürgen(CH)**

(74) Vertreter: **Troesch Scheidegger Werner AG**
**Patentanwälte,**
**Siewerdtstrasse 95,**
**Postfach**
**CH-8050 Zürich (CH)**

(54) **Verfahren zur Verfestigung von Schwermetall-enthaltenden Filterrückständen.**

(57) Für das Verfestigen von Schwermetall-enthaltenden Abfällen oder Rückständen mittels Verglasen bzw. Sinterung für eine anschliessende Entsorgung oder Wiederverwendung werden die Abfälle bzw. Rückstände mindestens mit einer Glas-bildenden und/oder zur Glaswandlung geeigneten Substanz und/oder mit einem Schmelzbeschleuniger vermischt, damit der Schmelzpunkt der Abfälle bzw. Rückstände erniedrigt wird. Insbesondere eignet sich das erfindungsgemässe Verfahren zur Verfestigung von Filterstaub oder Rauchgasreinigungsrückständen von Verbrennungsanlagen, wobei durch das Zusetzen der Substanzen und/oder des Beschleunigers der Schmelzpunkt unter 1000°C erniedrigt wird und das Verglasen bzw. Sintern in einem Temperaturbereich, vorzugsweise von 700 - 900°C, erfolgt.

EP 0 596 438 A2

EP 0 596 438 A2

Die vorliegende Erfindung betrifft ein Verfahren zur Verfestigung von Schwermetall enthaltenden Abfällen oder Rückständen mittels Verglasen bzw. Sinterung für eine anschliessende Entsorgung oder Wiederverwendung.

Für die Reduktion der Schadstoffbelastung in der Umgebung von Kehrichtverbrennungsanlagen sind diese Anlagen heute mit sogenannten Rauchgasreinigungsfiltern versehen. Der bei dieser Rauchgasreinigung anfallende Filterstaub ist stark schwermetallbelastet und somit giftig. Ebenfalls in denselben Oberbegriff wie der Filterstaub sind Schlacke und Schwebeteile zu rechnen, welche als Verbrennungsrückstände im Rauch enthalten sind. Auch diese Schlacke und die erwähnten Schwebeteile von Verbrennungsanlagen enthalten unter anderem viele Schwermetalle, die für die Umwelt schädlich sind. Neben Recycling-Verfahren für die Wiedergewinnung der erwähnten Schwermetalle, welche aufgrund des rückläufigen Marktes für Schwermetalle wenig attraktiv sind, muss ebenfalls nach anderen Lösungen zur Entsorgung dieser Problemstoffe gesucht werden. Die erwähnten Rückstände bzw. Abfälle in Verbrennungsanlagen gelten als Sondermüll und müssen in der Regel vor der Endlagerung konditioniert werden.

Für die Rauchgasrückstände bzw. den anfallenden Filterstaub sind heute an sich drei Behandlungsmethoden bekannt, nämlich die Verfestigung des Filterstaubes, thermische Behandlung und chemischbiologische Verfahren.

Für die Verfestigung des Filterstaubes wird ein Bindemittel, wie beispielsweise Zement, Polymerzement oder Kunstharze zugesetzt, um den Filterstaub in Fässer einzugiessen und so zu verfestigen. Der Nachteil dieses Verfahrens liegt darin, dass durch das Zusetzen des Bindemittels das Gewicht und das Volumen des verfestigen Filterstaubes massiv vergrössert wird. Im weiteren kann je nach Zusammensetzung des Filterrückstandes bzw. der Flugasche eine Verfestigung gelingen oder misslingen. Schlussendlich musste auch festgestellt werden, dass derart endgelagerte, verfestigte Filterrückstände gelegentlich durch Regenwasser zersetzt werden, weshalb Schwermetallsalze herausgewaschen werden können.

Das ebenfalls vorgeschlagene, thermische Verfahren sieht vor, dass durch Erhitzen des Filterstaubes über den Schmelzpunkt die Rückstände von Verbrennungsanlagen verglast werden. Der Vorteil liegt darin, dass die Schadstoffe Bestandteile der so hergestellten Glaspellets sind und nicht mehr herausgewaschen werden können. Jedoch arbeitet dieses Verfahren bei sehr hohen Temperaturen, d.h. bei ca. 1500°C, und stellt somit grosse Anforderungen an die thermische Beständigkeit der für die Verglasung verwendeten Apparate und benötigt zudem viel Energie. Auch hat es sich gezeigt, dass beim Verglasen durch die hohe Temperatur der Filterrückstand zersetzt wird und giftige Zersetzungsprodukte entweichen können.

Schlussendlich wird ebenfalls versucht den Filterstaub biologisch zu entsorgen, jedoch ist es bis heute nicht im technischen Massstabe gelungen, Schwermetalle mittels Bakterien natürlich abzubauen.

Es ist daher eine Aufgabe der vorliegenden Erfindung ein Verfahren vorzuschlagen, gemäss welchem bei Rauchgasreinigungs-Anlagen anfallende Abfälle bzw. Rückstände in eine kompakte und gut verfestigte Form mit möglichst kleinem Gewicht und Volumen zu bringen, ohne die bei den heute verwendeten Verfahren gravierenden Nachteile, um anschliessend einer Entsorgung, Endlagerung oder einer Wiederverwendung zugeführt werden zu können.

Erfindungsgemäss wird diese Aufgabe mittels einem Verfahren nach dem Wortlaut nach Anspruch 1 gelöst.

Vorgeschlagen wird, dass zur Verfestigung von Schwermetall-enthaltenden Abfällen oder Rückständen mittels Verglasen bzw. Sinterung für eine anschliessende Entsorgung oder Wiederverwendung, die Abfälle bzw. Rückstände mit mindestens einer glasbildenden und/oder zur Glaswandlung geeigneten Substanz und/oder einem Schmelzbeschleuniger versetzt werden, damit der Schmelzpunkt der Abfälle bzw. Rückstände erniedrigt wird.

Wie oben erwähnt eignet sich das Verfahren insbesondere zur Verfestigung von Filterstaub oder Rauchgasreinigungsrückständen, wobei durch das Zusetzen der Substanzen oder des Beschleunigers der Schmelzpunkt im wesentlichen unter 1000°C erniedrigt wird und das Verglasen bzw. Sintern wenigstens eines Teils des Filterstaubes oder der Rauchgasreinigungs-Rückstände in einem Temperaturbereich von ca. 600 - 1000°C, vorzugsweise 700 - 900°C, erfolgt.

Als glasbildende Substanzen eignen sich insbesondere Siliziumoxide, Boroxide, Phosphoroxide, Eisenoxide und/oder Germaniumoxid, welche vor dem Verglasen bzw. Sintern den Abfällen oder Rückständen bzw. dem Filterstaub oder den Rauchgasreinigungs-Rückständen zugesetzt werden. Zur Glaswandlung geeignete Substanzen umfassen im wesentlichen Litium-, Natrium-, Magnesium- und/oder bleihaltige Substanzen, wobei es sich beispielsweise um Oxide, Hydroxide oder um Salze, wie Carbonate und Sulfate der erwähnten Elemente handeln kann, sowie Fluoride wie Silikonfluoride oder Borfluorid.

Als Schmelzbeschleuniger eignen sich insbesondere Natrium-, Kalium- und/oder Eisenhydroxide oder -Karbonate, welche zusammen mit den glasbildenden und/oder zur Glaswandlung geeigneten Substanzen oder alleine den Abfällen oder Rückständen vor der Verfestigung zugesetzt werden.

2

Als Schmelzbeschleuniger eignen sich aber auch Borsäure oder Borsäureanhydrid, welche mit der Filterasche zusammengeschmolzen werden.

Von den erwähnten Substanzen oder den Schmelzbeschleunigern werden insgesamt 5 - 20 Gew.%, vorzugsweise ca. 10 Gew.%, bezogen auf das Gesamtgewicht zugesetzt, wobei eine oder mehrere Substanzen und/oder einer oder mehrere Beschleuniger den Abfällen oder Rückständen bzw. dem Filterstaub oder den Rauchgasreinigungs-Rückständen zugesetzt werden können.

Die Mischung aus Abfällen bzw. Rückständen und den zugesetzten Substanzen und/oder Beschleunigern werden vor dem Verglasen bzw. Sintern gepresst, damit eine möglichst starke Reduktion des Schmelzpunktes der Mischung erzielt werden kann.

Um beim Pressvorgang allfällig in der Mischung eingeschlossene Luft zu entfernen wird vorteilhafterweise an die Mischung ein Vakuum angelegt.

Da die verschiedenen Komponenten in den Abfällen bzw. Filterrückständen durch das Zusetzen der erfindungsgemässen Substanzen oder Schmelzbeschleuniger eine unterschiedliche Schmelzpunkterniedrigung erfahren, kann es in einem für die Durchführung des Verfahrens gewählten Temperaturbereich bzw. im gewählten Brenntemperaturbereich vorkommen, dass bereits gewisse Substanzen bzw. Metalle oder deren Ionen verdampfen bzw. Rauchgase bilden. Diese tieferschmelzenden Komponenten werden vorzugsweise mittels nichtrauchenden Substanzen beschichtet bzw. von diesen fixiert, um so die Bildung von Rauchgasen zu verhindern. Dies geschieht in der Regel durch das Zusetzen weiterer Substanzen, welche im gewählten Arbeitstemperaturbereich bzw. bei der Temperatur für die Durchführung des Brennvorganges aufschmelzen bzw. sintern oder die verdampfenden Metalle oder deren Ionen adsorbieren. Bei diesen weiteren Substanzen kann es sich beispielsweise um Tonarten wie Zeolithe handeln, die gute Adsorption von Schwermetallen zeigen, wodurch so die Rauchgasbildung reduziert wird. Von diesen weiteren Substanzen können bis maximal 20 Gew.%, bezogen auf das Gesamtgewicht, beigefügt werden, vorzugsweise 3 - 10 Gew.% bzw. ca. 5 Gew.%.

Der grosse Vorteil der oben angeführten erfindungsgemässen Verfahren gegenüber den heute bekannten Verfahren für das Entsorgen bzw. Verfestigen von Filterrückständen von Verbrennungsanlagen liegt darin, dass einerseits durch die massive Reduktion des Schmelzpunktes die Verglasung bzw. der Sinterungsprozess bei ca. 700 - 900 °C durchführbar ist, was anlagetechnisch problemlos ist, und zudem in den meisten Fallen nicht zu giftigen Zersetzungsprodukten führt. Auch energiemässig ist die Durchführung des Verfestigungsprozesses bei den genannten Temperaturen durchaus vertretbar. Schlussendlich liegt der grosse Vorteil an den erfindungsgemässen Verfahren, dass die dabei hergestellten Verfestigungsprodukte in bezug auf ihr Gewicht kaum schwerer sind, als der effektiv zu entsorgende Filterrückstand selbst. Auch volumenmässig ist das Endprodukt vorteilhaft, und schlussendlich weisen verglaste Materialien den grossen Vorteil auf, dass ein Auswaschen der Schadstoffe bzw. der Schwermetalle praktisch ausbleibt.

Die Erfindung wird nun nachfolgend unter Bezug auf zwei Ausführungsbeispiele näher erläutert.

1. Beispiel:

Die für die Versuche verwendete Flugasche bzw. der Filterrückstand ergab bei einer Salpetersäure/Flussäure-Extraktion bei 150 °C im Druckaufschlussbehälter folgende Schwermetallgehalte: $Cd^{2+}$ 0,2 mg/g, $Pb^{2+}$ 10,9 mg/g, $Zn^{2+}$ 26,4 mg/g und $Hg^{2\pm}$ 0,005 mg/g.

Als Zusätze wurden Bor- und Phosphorderivate verwendet, und zwar mit einem maximalen Anteil von 10 Gew.%, bezogen auf das Gesamtgewicht der Mischung. Die Gemische der Zusätze mit der Flugasche mussten gepresst werden, da nur so eine enge Berührung, und damit eine optimale Schmelzpunterniedrigung bei der Verglasung gewährleistet ist. Zudem wurde die Pressform unter Vakuum entgast, um allfällige Lufteinschlüsse in der Mischung zu entfernen. Ob eine gewünschte Verglasung eintritt, kann durch Erhitzen der Proben während zweier Stunden auf 800 bzw. 900 °C geprüft werden. Gewählt wurden Borsäureanhydrid ($B_2O_3$) und Ammoniumhydrogen-Phosphat ($NH_4H_2PO_4$), wobei selbstverständlich andere der oben vorgeschlagenen, erfindungsgemässen Substanzen oder Schmelzbeschleuniger zugesetzt werden können. Auf die Zugabe von Bleisalzen wurde verzichtet, da ja bekanntlich das Element Blei selbst sehr giftig ist. Auf eine Prüfung von Lithiumoxid wurde aufgrund des hohen Preises verzichtet.

Die Filterasche wurde in verschiedenen Verhältnissen mit den Zusätzen versetzt und in einem Mörser gemischt und zerkleinert. Dabei wurden folgende Zusätze zur Bildung der Mischungen beigefügt:
1) 5% $B_2O_3$ und 5% $NH_4H_4PO_4$; 2) 5% $NH_4H_2PO_4$, sowie 3) 10% $NH_4H_2PO_4$.

Anschliessend wurde das Material mit einer hydraulischen Presse bei 10t Belastung zu Tabletten gepresst. Daraus wurden Tabletten von ca. 8g Gewicht hergestellt. Zur Beurteilung der gebrannten Proben wurden sogenannte Eluattests durchgeführt, wobei die Untersuchung der Eluate direkt Anhaltspunkte über die Abgabe von Schwermetallen liefert, wobei diese Untersuchung ebenfalls als Kriterium für die Deponierbarkeit von Sondermüll, beispielsweise vom BUWAL, verwendet wird. Die Glasbildung bzw. Sinterung wurde sowohl bei 800 °C wie auch bei 900 °C durchgeführt. Die Laugungsresultate der Schwermetallkonzentrationen in den verschiedenen Eluaten ist in der nachfolgenden Tabelle zusammengefasst.

Tabelle 1

| Schwermetall-Ionen-Konzentrationen der Eluate der versch. Aschepillen | | | | | |
|---|---|---|---|---|---|
| t | Zusatz | $Cd^{2+}$[mg/l] | $Pb^{2+}$[mg/l] | $2n^{2+}$[mg/l] | $Hg^{2+}$[mg/l] |
| 800 °C | 5% $B_2O_3$ und 5% $NH_4PO_4$ | 6,78 | 3,54 | 84,86 | <1,0 |
| | 5% $NH_4H_2PO_4$ | 7,55 | 1,0 | 33,08 | <1,0 |
| | 10% $NH_4H_2PO_4$ | 7,17 | 1,25 | 61,59 | <1,0 |
| 900 °C | 5% $B_2O_3$ und 5% $NH_4H_2PO_4$ | 0,050 | 0,76 | 8,43 | <1,0 |
| | 5% $NH_4H_2PO_4$ | 0,083 | 0,32 | 4,27 | <1,0 |
| | 10% $NH_4H_2PO_4$ | 0,071 | 0,49 | 7,61 | <1,0 |
| Grenzwert | | 0,1 | 1,0 | 10,0 | - |

Die in der Tabelle 1 angeführten Laugungsresultate der Brennversuche bei 800 °C ergeben, dass die gestellten Anforderungskriterien bzw. der angeführte Grenzwert bei den Schwermetallen Kadmium und Zink klar überschritten wird. Hingegen zeigt die Versuchsserie mit einer Brenntemperatur bei 900 °C und denselben Additiven eine deutliche Reduzierung der Schwermetall-Laugung. Die Schwermetallkonzentrationen im Eluat liegen ca. 40 - 50% unterhalb den erwähnten Anforderungskriterien bzw. unterhalb dem Grenzwert.

2. Beispiel:

Eine repräsentative Elektrofilteraschenprobe aus der Kehrichtverbrennungsanlage Josefstrasse, Zürich, mit in etwa analoger Zusammensetzung wie die in Beispiel 1 verwendete Flugasche, wurde durch Mahlung auf einer Zirconium-Mühle homogenisiert und anschliessend auf der Presse der ETH Zürich bei einem Druck von 10 Tonnen während 2 Minuten gepresst. Insgesamt wurden 20 Pillen hergestellt, 10 Pillen ohne Zusatz und 10 Pillen mit 10% Natriumhydrogenphosphat.

Die gepressten Pillen wurden anschliessend bei 650 °C während einer Stunde gebrannt.

Je 6 Pillen wurden anschliessend gemäss der Technischen Verordnung Abfall (siehe Extraktionsbedingungen im 1. Beispiel) gelaugt. Die Schwermetallkonzentrationen im Eluat sind in der Tabelle 2 aufgeführt.

Tabelle 2

| Reduktion der Schwermetall-Laugbarkeit bzw. Eluierbarkeit durch Zugabe von 10% Natriumhydrogenphosphat ($NH_4H_2PO_4$) | | | | |
|---|---|---|---|---|
| Versuch | $Cd^{2+}$ | $Pb^{2+}$ | $Zn^{2+}$ | $Hg^{2+}$ |
| | mg/1 | mg/1 | mg/1 | mg/1 |
| O-Probe | 16,21 | 6,4 | 51,9 | 0,12 |
| 10% $NH_4H_2PO_4$ | 0,093 | 0,45 | 6,8 | < 0,001 |

Aus Tabelle 2 wird nun klar erkennbar, dass durch das erfindungsgemässe Verglasen der Elektrofilteraschenproben die Schwermetall-Laugbarkeit, durch Zugabe von 10% Natriumhydrogenphosphat, entscheidend verringert werden konnte. Sämtliche mit Natriumhydrogenphosphat versetzten Proben zeigen Laugungs- bzw. Eluatwerte, die unterhalb des in Tabelle 1 angeführten Grenzwertes liegen. Da die in Beispiel 2 verwendete Elektrofilteraschenprobe von einer Kehrichtverbrennungsanlage stammt, kann überraschenderweise davon ausgegangen werden, dass bei einem Zusatz von beispielsweise 10% Natriumhydrogenphosphat und Verglasen der Probe bei 650 °C bereits Bedingungen erreicht werden können, die den Anforderungskriterien, in bezug auf Grenzwerte, entsprechen. Dass mit der in Beispiel 2 verwendeten Probe und mit einer Sinterungstemperatur von 650° derart gute Laugungswerte erzielt werden konnten bringt die Vermutung nahe, dass oberhalb einer Sinterungstemperatur von 650° im Bereich beispielsweise um 800° C Schwermetalle erneut freigesetzt werden, was zu den in Beispiel 1 bei 800° Sinterungstemperatur ermittelten hohen Laugungswerte geführt hat. Diese bei 800° C Sinterungstemperatur freigesetzten Schwermetalle werden verflüchtigt, weshalb dann bei 900° C Sinterungstemperatur erneut ausgezeichnete Laugungswerte erreicht werden konnten. Aus diesem Grunde ist es also nicht nur wesentlich den Filterrückständen Zusätze beizufügen, um deren Schmelztemperatur zu reduzieren, sondern auch ist die optimale Sinterungstemperatur der Mischung zu ermitteln, bei welcher die zu entsorgenden, verfestigten Schwermetallkörper herzustellen sind, um möglichst geringe Laugung dieser Schwermetalle zu erreichen.

3. Beispiel:

Filterasche wurde mit Borsäureanhydrid oder besser (und wesentlich billiger) mit Borsäure zusammen geschmolzen. Von Borsäureanhydrid wurden 10 - 15 Gew.%, resp. von Borsäure entsprechend mehr, nämlich 16,5 - 23,9 % zugegeben.

Das Gemenge schmolz zwischen 900°C und 1000°C. Die erreichten Eluatwerte sind mit Borsäure im Durchschnitt etwas besser als mit Borsäureanhydrid. Die erhöhte Zugabe von Borsäure (theoretischer Faktor 1,78) ist wegen der Wasserabspaltung bei hoher Temperatur nötig, wird aber durch den etwa drei mal tieferen Preis wettgemacht.

Bor wirkt als Netzwerkbildner und kann bei diesen Temperaturen bei den gegebenen Zugaben die Filterasche vollständig lösen, resp. einschmelzen. Von einem Eutektikum kann nicht gesprochen werden, da hier die Schmelztemperatur etwa 500°C über derjenigen von reinem Borsäureanhydrid liegt.

Die Qualität des erzielten Glases hängt stark von der Zusammensetzung der Filterasche ab. Calcium, Natrium, Kalium und andere häufig in Filterasche vorkommende Elemente wirken als Netzwerkwandler und verändern so direkt die Glasqualität. In den durchgeführten Versuchen konnte gezeigt werden, dass unter Verwendung von Borsäure resp. Borsäureanhydrid entsprechend dem vorgeschlagenen Verfahren Gläser mit Reststoffqualität resultieren.

Nachfolgend sind Messungen mit Asche der Kehrichtverbrennungsanlage Trimmis dargestellt. Als Zugabe wurde Borsäure im oben angeführten Bereich gegeben, jeweils 10; 11,25; 12,5; 13,75 und 15 Gew.% Borsäureanhydrid entsprechend.

Tabelle 3

| % | 16,5 | 18,4 | 20,3 | 22,1 | 23,9 | Reststoff | Inertstoff |
|-----|-------|-------|-------|-------|-------|-----------|------------|
| Sn | <0,22 | 0,63 | 0,69 | 0,71 | <0,26 | 2 | 0,2 |
| Cr | <0,01 | <0,04 | <0,03 | <0,05 | <0,02 | 0,1 | 0,01 |
| Zn | 0,84 | 1,53 | 2,78 | 4,34 | 1,33 | 10 | 1 |
| Cd | <0,01 | 0,02 | 0,03 | 0,03 | <0,01 | 0,1 | 0,01 |
| Pb | <0,09 | 0,37 | 0,29 | 0,15 | <0,08 | 1 | 0,1 |
| Ni | 0,67 | 1,17 | 1,13 | 1,09 | 0,55 | 2 | 0,2 |
| Co | <0,03 | <0,1 | <0,1 | <0,1 | <0,06 | 0,5 | 0,05 |
| Cu | 0,01 | <0,01 | 0,02 | 0,01 | 0,01 | 0,5 | 0,2 |
| Al | 0,10 | 0,56 | 0,60 | 0,37 | 0,05 | 10 | 1 |
| Ba | 0,12 | 0,17 | 0,17 | 0,45 | 0,22 | 1 | 0,5 |

Kommentar: Tabelle 3 zeigt deutlich, dass bei Zugabe von 16,5 Gew.% Borsäure und 23,9 Gew.% Borsäure die besten Messungen erzielt werden konnten. Andererseits aber fiel die Schmelztemperaturreduktion im Bereich 20,3 Gew.% Zugabe von Borsäure am intensivsten aus, indem hier die Schmelztemperatur auf ca. 900°C reduziert werden konnte. Es ist also schlussendlich eine Frage der Optimierung, welche Zugabe an Borsäure gewählt wird, damit einerseits möglichst geringe Extraktionswerte aus der behandelten Filterasche erhalten werden können, andererseits aber die Filterasche bei relativ tiefer Temperatur ge-

EP 0 596 438 A2

schmolzen wird.

Tabelle 3 zeigt auch, dass in allen Fällen Reststoffqualtität erzielt werden konnte. Im Falle von Chrom, Kadmium, Blei, Kobalt, Kupfer, Aluminium und Barium wurde sogar Inertstoffqualität erreicht.

Die oben angeführten, erfindungsgemässen Beispiele dienen lediglich der Veranschaulichung und Erläuterung des erfindungsgemässen Verfahrens und können selbstverständlich auf x-beliebige Art und Weise modifiziert, variiert oder verändert werden. So ist durch Optimierung der Zusammensetzung der Zusätze, durch Zusatzmenge, Prozessführung, usw. eine weitere Optimierung des Verfahrens möglich, was beispielsweise dazu führt, dass, wie Beispiel 2 zeigt, bereits bei tieferen Temperaturen, wie beispielsweise bei 600 oder 700°C bei der Verglasung bzw. der Sinterung verfestigte Körper hergestellt werden können, welche die oben angeführten Grenzwertkriterien erfüllen.

Grundsätzlich erfindungswesentlich ist die Tatsache, dass beim Verglasen bzw. Sintern von Schwermetall-enthaltenden Abfällen und Rückständen, wie beispielsweise Filterstaub oder Rauchgasreinigungsrückständen durch Zusetzen von Glas-bildenden und/oder zur Glaswandlung geeigneter Substanzen oder von Schmelzbeschleunigern der Schmelzpunkt der Abfälle bzw. Rückstände derart reduziert werden kann, dass die Verglasung bzw. Sinterung verfahrenstechnisch in vernünftigem Rahmen durchgeführt werden kann.

**Patentansprüche**

1.  Verfahren zur Verfestigung von Schwermetall-enthaltenden Abfällen oder Rückständen, mittels Verglasen bzw. Sinterung für eine anschliessende Entsorgung oder Wiederverwendung, dadurch gekennzeichnet, dass den Abfällen bzw. Rückständen mindestens eine Glas-bildende und/oder zur Glaswandlung geeignete Substanz und/oder ein Schmelzbeschleuniger, zu deren Schmelzpunkterniedrigung, zugesetzt wird.

2.  Verfahren nach Anspruch 1, zur Verfestigung von Filterstaub oder Rauchgasreinigungsrückständen, dadurch gekennzeichnet, dass durch Zusetzen der Substanzen und/oder des Beschleunigers der Schmelzpunkt unter 1000°C erniedrigt wird und das Verglasen bzw. Sintern wenigstens eines Teiles der Abfälle bzw. Rückstände in einem Temperaturbereich von ca. 600 - 1000°C, vorzugsweise 700 - 900°C, erfolgt.

3.  Verfahren nach einem der Ansprüche 1 oder 2, dadurch gekennzeichnet, dass als Glas-bildende Substanzen Siliziumoxide, Boroxide, Phosphoroxide und/oder Eisenoxide zugesetzt werden.

4.  Verfahren nach einem der Ansprüche 1 - 3, dadurch gekennzeichnet, dass als zur Glaswandlung geeignete Substanzen Silizium-, Natrium-, Magnesium- und/oder Bleihaltige Substanzen zugesetzt werden.

5.  Verfahren nach einem der Ansprüche 1 - 4, dadurch gekennzeichnet, dass als Schmelzbeschleuniger Natrium-, Kalium-, und/oder Eisenhydroxid oder -Karbonat zugesetzt werden.

6.  Verfahren nach einem der Ansprüche 1 - 4, dadurch gekennzeichnet, dass als Schmelzbeschleuniger Borsäure oder Borsäureanhydrid zugesetzt werden.

7.  Verfahren nach einem der Ansprüche 1 - 6, dadurch gekennzeichnet, dass an Substanzen und/oder Schmelzbeschleuniger insgesamt 5 - 20 Gew.%, vorzugsweise ca. 10 Gew.%, bezogen auf das Gesamtgewicht, zugesetzt werden.

8.  Verfahren nach einem der Ansprüche 1 - 7, dadurch gekennzeichnet, dass die Mischung aus Abfällen bzw. Rückständen und zugesetzten Substanzen und/oder Beschleunigern vor dem Verglasen bzw. Sintern gepresst wird.

9.  Verfahren nach Anspruch 8, dadurch gekennzeichnet, dass beim Pressen der Mischung Vakuum angelegt wird, um allfällig in der Mischung eingeschlossene Luft zu entfernen.

10. Verfahren nach einem der Ansprüche 1 - 9, dadurch gekennzeichnet, dass eine weitere Substanz beigefügt wird, welche im für das Verglasen bzw. Sintern wenigstens eines Teiles der Abfälle bzw. Rückstände gewählten Arbeitstemperaturbereiches vollständig verglast oder schmilzt, um die beim Verglasen oder Sintern entstehende Matrix, gebildet aus wenigstens einem Teil der Abfälle oder Rückstände mit der Substanz und/oder dem Beschleuniger, wenigstens teilweise zu beschichten, um beim Brennvorgang die Rauchgasbildung zu reduzieren.

11. Verfahren nach einem der Ansprüche 1 - 9, dadurch gekennzeichnet, dass eine weitere Substanz beigefügt wird, welche gute Adsorptionseigenschaften von Schwermetallen bzw. deren Ionen aufweist, um beim Durchführen des Brennvorganges bzw. der Sinterung der Filterrückstände allfällig verdampfende Metalle oder deren Ionen zu adsorbieren, wodurch so die Rauchgasbildung reduziert wird.

12. Verfahren nach einem der Ansprüche 10 oder 11, dadurch gekennzeichnet, dass als weitere Substanz Tonarten, wie beispielsweise Zeolithe, in der Grössenordnung bis zu 20 Gew.%, vorzugsweise ca. 5 Gew.%, bezogen auf das Gesamtgewicht, beigefügt werden.